# EUROPEAN PATENT APPLICATION

(11) **EP 0 594 905 A1**
(43) Date of publication of application: **04.05.1994**
(21) Application number: 92309851.1
(22) Date of filing: 28.10.1992
(51) Int. Cl.: B23Q 3/154

(54) **Compound locking structure and applied device of mechanical and magnetic suction force for fixture**

(71) Applicant: Yang, Tai-Her, Taipei (TW)
(72) Inventor: Yang, Tai-Her, Taipei (TW)
(74) Representative: Arthur, Bryan Edward

(57) **Abstract**

A compound locking structure for attachment to a work table, or machine body, by means of mechanically or electricalyy operable magnetic attraction features. The structure comprises a main body for being locked to a work table or machine body, a set of jaws for clamping a workpiece, and magnetic attraction fixtures. The magnetic attraction fixture comprises a permanent magnet moveable into and out of an induction coil, so that the magnetic attraction is controlled by the magnets position.
Alternatively, the magnet is positioned in the induction coil, and the magnetic attraction is controlled by the current passing through the coil.

## Description

### SUMMARY OF THE INVENTION

The present invention relates to a compound locking structure and applied device of mechanical and magnetic force for fixture, and particularly to a fixture with a workpiece bearing plane which is constructed of a magnetic sucking plate to enable the fixture to have mechanical chucking and magnetic sucking functions, and both functions can be operative alternatively or simultaneously to provide for the following applications subject to the control device, including:
(1) To provide for selecting mechanical force for driving chucking block or magnetic force for locking the workpiece independently.
(2) Rough shearing and fine shearing processes - i.e. to apply mechanical force for clamping the workpiece for processing first and then convert to magnetic sunction for processing.
(3) To suck the workpiece with magnetic force and clamp it with mechanical force to form downward suction and two-side clamping force to prevent the workpiece from floating up.
(4) To apply magneic force for sucking the workpiece and clamp it with mechanical force to minimize floating deformation; in case further sophisticated processing is required, it may allow to reduce or release mechanical clamping force but maintain magnetic suction for sophisticated processing.
(5) Further design is to adjust the amount of magnetic suction through the control device so as to revise the amount of deformation before or during processing.
(6) At least two sets of fixture having mechanical clamping function and magnetic sucking function provided for alternative sucking/clamping in order to move the workpiece from one set to another set of fixture to change the side of workpiece for processing whereby each side of workpiece can be processed.
(7) Manually controlled or connected to electrical-controlled interface device for accepting electrical-control commands to execute the functions (1) thru (6).

### BRIEF DESCRIPTION OF THE INVENTION

FIG. 1 is an elevational illustrative view showing the embodiment of the compound locking means and applied device of mechanical and magnetic suction of fixture.

FIG. 2 is a front and exploded view of FIG. 1.

FIG. 3 is a side view of FIG. 1.

FIG. 4 is a bottom view of FIG. 1.

FIG. 5 is an elevational and sectional view of FIG. 1.

FIG. 6 is an embodiment of vertical polyhedral combination of the compound locking structure and applied device of mechanical and magnetic suction for fixture.

FIG. 7 is an embodiment of plane combination of the compound locking structure and applied device of mechanical and magnetic suction for fixture.

FIG.8 is an embodiment of the compound locking structure and applied device of mechanical and magnetic suction for fixture applied to chucking structure.

FIG. 9 is an embodiment including a plane magnetic plate with tap holes or T-slot in company with flexible fixture assembly.

FIG. 10 is an embodiment showing a polyhedral structure for the device shown in FIG. 9.

### DETAILED DESCRIPTION OF THE INVENTION

In general, the workpiece has to be fixed before processing so that various kinds of fixtures have been designed for application. And fixture is often to clamp the workpiece with mechanical or magnetic suction of which mechanical clamping includes:
manpower mechanical economizer structure including worm assembly or cam assembly or fluid-driving elements or links for driving chucking block to clamp the workpiece;
fluid pressure source from motor or power pump for driving the chucking block to clamp the workpiece;
Magnetic suctions include:
electrical coil for sucking magnetic workpiece or driving the chucking block to clamp the workpiece;
to suck magnetic workpiece with permanet magnet or driving driving the chucking block for clamping the workpiece.

Above-mentioned mechanical fixtures often result in the deformation of workpiece so that they are commonly applied to rough and fine processing, and also applied to sophisticated processing under special structural conditions. And magnetic suctions are often applied to light shearing and sophisticated processing during the final stage due to large sucking area, mean force applied to the workpiece and smaller deformation of workpiece. However, as we know, during the processing, the less times the workpiece is removed the working time and labor is economized more and better precision is attained. The compound locking structure and applied device of mechanical and magnetic suction for fixture according to the present invention is a newly-invented fixture with compound functions of mechanical clamping and magnetic suction, which can apply following functions to the workpiece:
(1) To provide for selecting mechanical force for driving chucking block or magnetic force for locking the workpiece independently.
(2) Rough shearing and fine shearing processes - i.e. to apply mechanical force for clamping the workpiece for processing first and then convert to magnetic sunction for processing.
(3) To suck the workpiece with magnetic force and clamp it with mechanical force to form downward suction and two-side clamping force to prevent the workpiece from floating up.
(4) To apply magneic force for sucking the workpiece and clamp it with mechanical force to minimize floating deformation; in case further sophisticated processing is required, it may allow to reduce or release mechanical clamping force but maintain magnetic suction for sophisticated processing.
(5) Further design is to adjust the amount of magnetic suction through the control device so as to revise the amount of deformation before or during processing.
(6) At least two sets of fixture having mechanical clamping function and magnetic sucking function provided for alternative sucking/clamping in order to move the workpiece from one set to another set of fixture to change the side of workpiece for processing whereby each side of workpiece can be processed.
(7) Manually controlled or connected to electrical-controlled interface device for accepting electrical-control commands to execute the functions (1) thru (6).

The present invention may be better understood through the following detailed specification together with the accompanying drawings wherein:

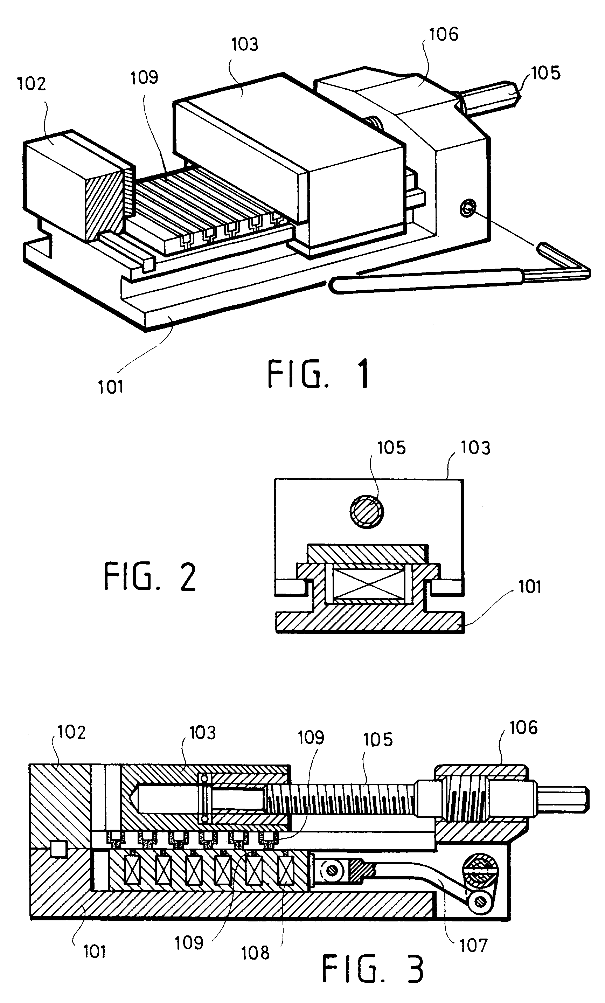

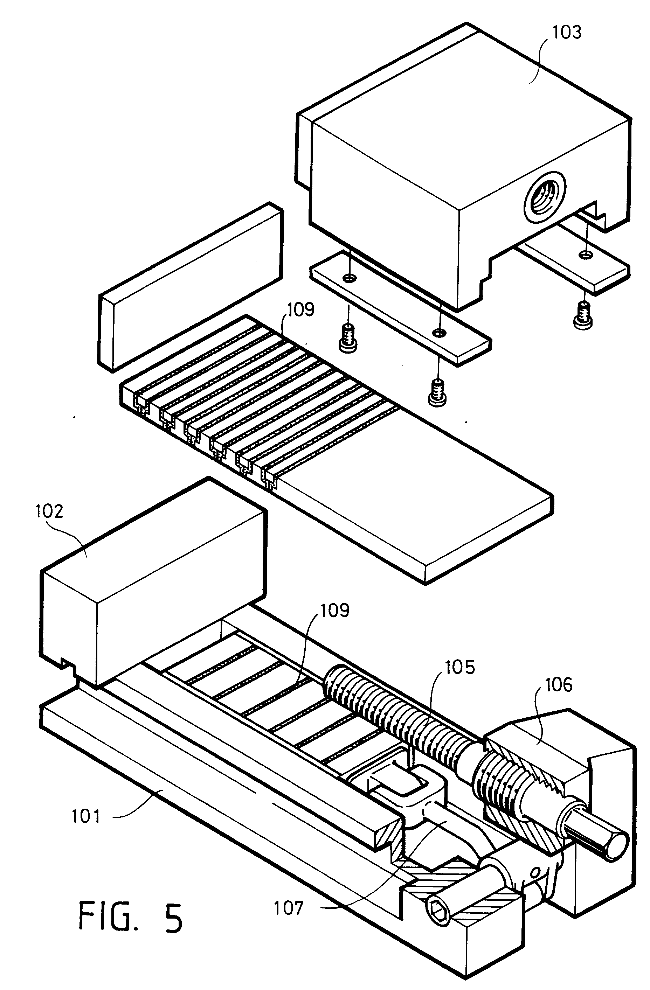

FIG. 1 is an elevational illustrative view showing the embodiment of the compound locking structure and applied device of mechanical and magnetic suction for fixture.
FIG. 2 is a front and exploded view of FIG. 1.
FIG. 3 is a side exploded view of FIG. 1.

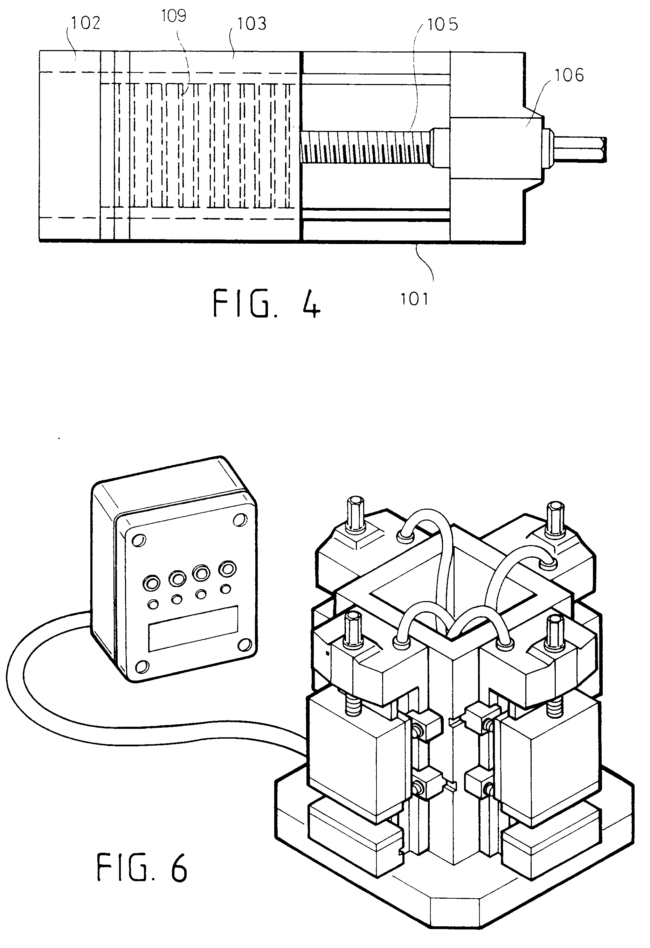

FIG. 4 is a bottom view of FIG. 1.
FIG. 5 is an elevational and exploded view of FIG. 1.

The structure includes:
a main body 101 for being locked at the work table or connected securely to the machine body or rotable shaft, provided for chucking the workpiece and for putting up at least one set of fixed jaw and movable jaw, which is characterized by the main body accomodating a controllable permanent magnet 10 (or external electrical exciting coil), and workpiece sucking faces with sucking function comprising gap stuff 109 and each permeance magnet pole;
fixed jaw 102 being one set or more installed at the main body and permissible for one-piece structure or removable;
movable jaw 103 being one set or more coupling at the main body for clamping/releasing relatively with fixed jaw; or fixed jaw not installed but included a plural movable jaws;
movable jaw driving structure being a manpower-driving structure comprising drive worm 105, worm strut 106 and related elements, such as bearing, etc.; such movable jaw structure also can use hydraulic or pneumatic or motor as driving rotary source or driving linear fluid power cylinder for pushing/pulling movable jaw directly for clamping or releasing relatively with fixed jaw, and operating valve for foregoing motor or fluid driving device can be manually-controlled switch for clamping or connected electrical interface device for accepting electrical commands;
magnetic sucking operational device 107 being a permanent type magnet, provided as operating arm for sucking the main body; sucking force of permanent magnet against the workpiece can be controlled by means of intermittent change or change in shunt amount of magnetic coil; if it is a coil exciting type, then a switch device is provided for sucking up or releasing the workpiece, said switch device may be manually controlled or connected electrical interface device for accepting electrical commands; aforesaid coil exciting type magnet may further control its exciting current or alternate its winding to change magnetic sucking force.

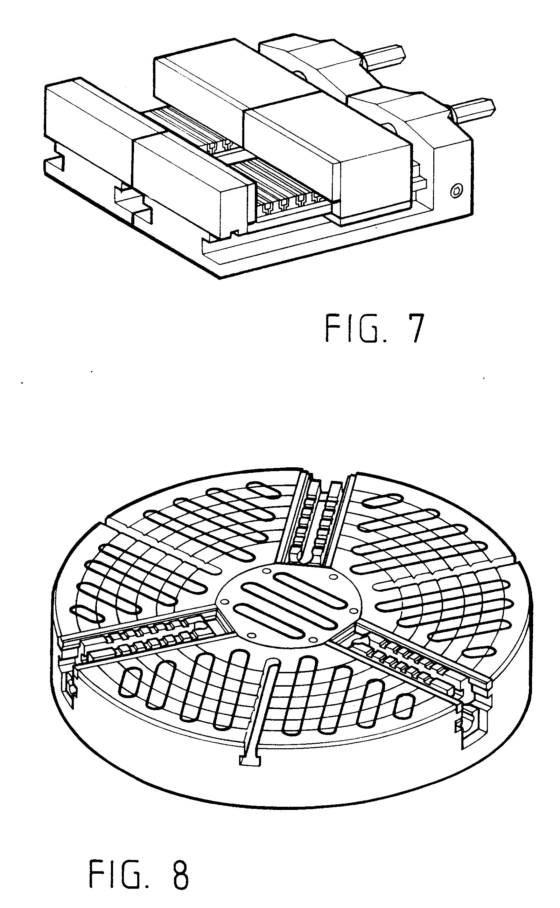

We may further achieve vertical polypheral assembly as the embodiment in FIG. 6 through plural assembly of the structure. Such polypheral assembly is often applied to mechanical processing equipment with positioning and rotary working table; the plural plane assemblies as FIG. 7 is for mass production and total numbers of assemblies depend on the requirement.

Besides, we may also apply it to chucking type structure for mechanical clamping by claw or magnetic suction by the chuck as FIG. 8 or other kind of configuration.

Aforesaid driving structure and main body can be one-piece constructed or fixed in combination, or assembly type structure to be removed together with fixed jaw and movable jaw when main body is ready for being applied to plane magnetic sucking plate.

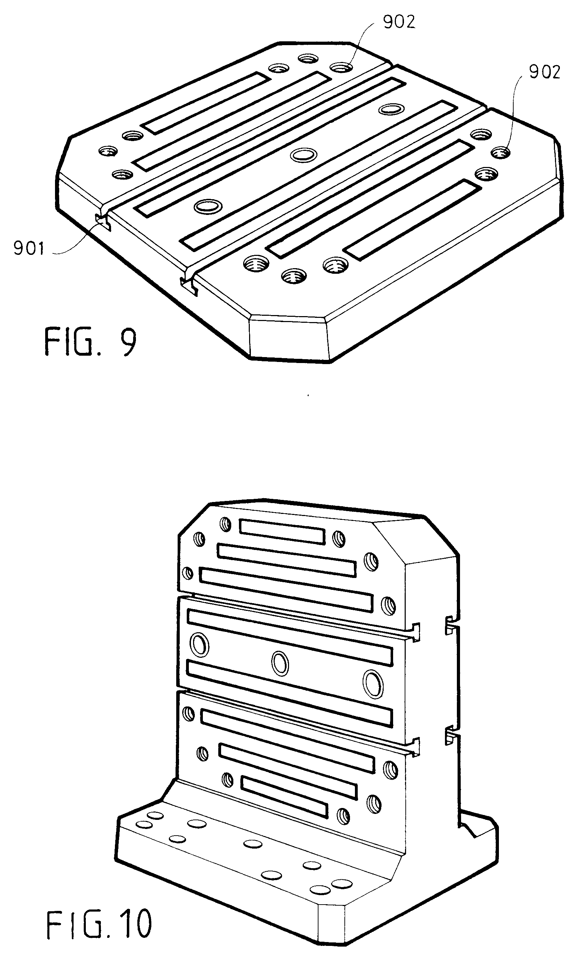

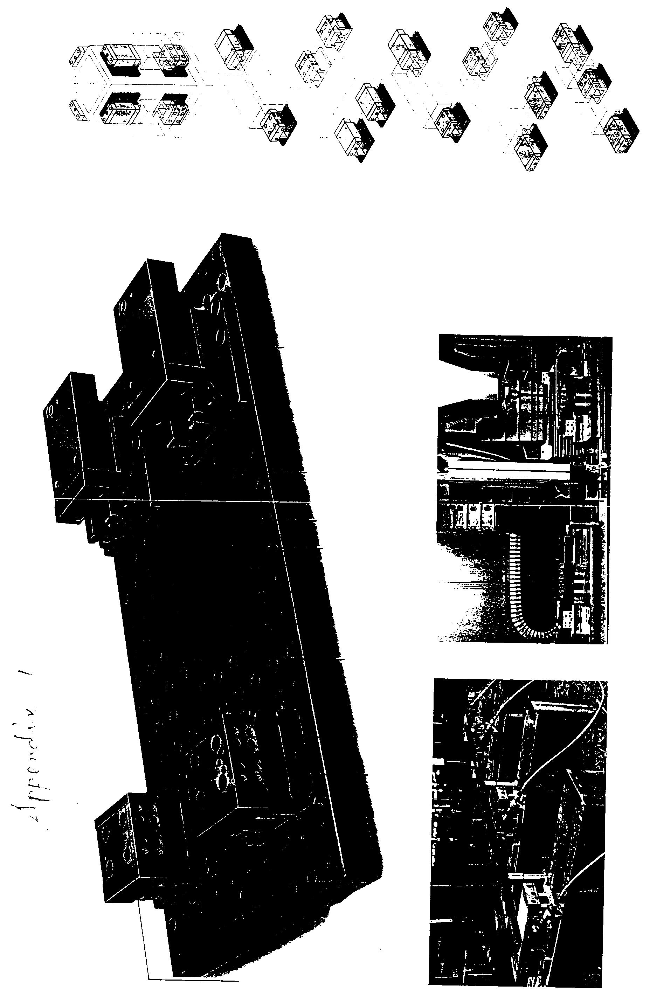

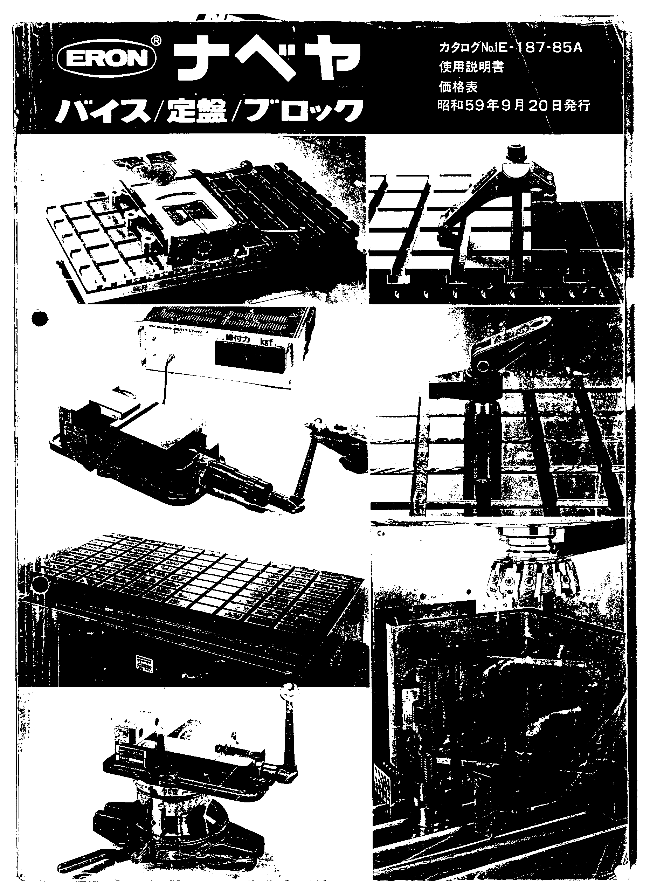

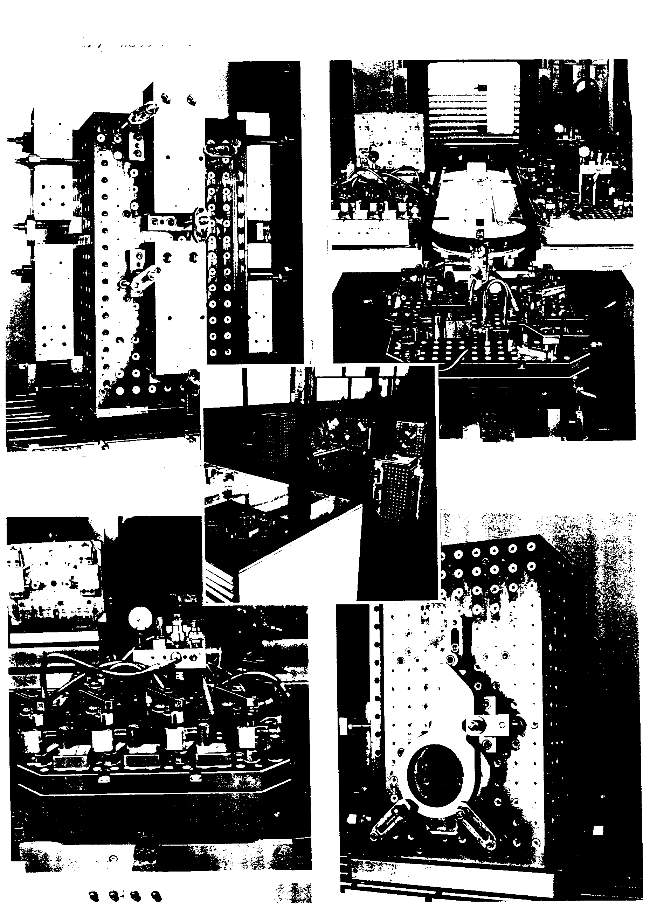

Besides, it may also be composed of plane magnetic plate with tap holes or T-slot in company with flexible fixture assembly as shown in FIG. 9 wherein comprising:
a permanent magnet or magnetic coil exciting type magnetic sucking plate, mounted a standard type tap hole assembly 902 for mounting auxiliary chucking claw or T-slot assembly 901 for mounting flexible fixture; the structure also can be a polypheral structure as the device of FIG. 9 shown in FIG. 10;
flexible fixture assembly adopts conventional jaw type (as Appendix 1), flexible clamping block (as Appendix 2), flexible push-down type (as Appendix 3) and so on.

Since a fixture is to fit the workpiece there is a wide variety of the structure so that the embodiment of compound locking structure of mechanical and magnetic suction disclosed by the present invention is provided for explaining purpose only not to limit its function. However, doubtless the compound locking structure for fixture according to the present invention are applicable to various kinds of fixtures.

To conclude the above-mentioned statement, the compound locking structure and applied device of mechanical and magnetic suction for fixture according to the present invention has provided a new design for fixture to allow for saving working hours and labor and advancing processing precision. Its means and novelty and practical value did have commercial value. Please examine it in accordance with the law.

## Claims

1. A compound locking structure and applied device of mechanical and magnetic suction for fixture with a bearing face for workpiece being made into a magnetic sucking plate structure to enable the fixture to have mechanical chucking and magnetic sucking functions, and both functions can be operative alternatively or simultaneously subject to the control device.

2. The compound locking structure and applied device of mechanical and magnetic suction for fixture according to claim 1, comprising:
a main body for being locked at the work table or connected securely to the machine body or rotable shaft, provided for chucking the workpiece and for putting up at least one set of fixed jaw and movable jaw, which is characterized by the main body accomodating a controllable permanent magnet (or external electrical exciting coil), and workpiece sucking faces with sucking function comprising gap stuff and each permeance magnet pole;
fixed jaw being one set or more installed at the main body and permissible for one-piece structure or removable;
movable jaw being one set or more coupling at the main body for clamping/releasing relatively with fixed jaw; or fixed jaw not installed but included a plural movable jaws;
movable jaw driving structure being a manpower-driving structure comprising drive worm, worm strut and related elements, such as bearing, etc.; such movable jaw structure also can use hydraulic or pneumatic or motor as driving rotary source or driving linear fluid power cylinder for pushing/pulling movable jaw directly for clamping or releasing relatively with fixed jaw, and operating valve for foregoing motor or fluid driving device can be manually-controlled switch for clamping or connected electrical interface device for accepting electrical commands;
magnetic sucking operational device being a permanent type magnet, provided as operating arm for sucking the main body; sucking force of permanent magnet against the workpiece can be controlled by means of intermittent change or change in shunt amount of magnetic coil; if it is a coil exciting type, then a switch device is provided for sucking up or releasing the workpiece, said switch device may be manually controlled or connected electrical interface device for accepting electrical commands; aforesaid coil exciting type magnet may further control its exciting current or alternate its winding to change magnetic sucking force.

3. The compound locking structure and applied device of mechanical and magnetic suction for fixture according to claim 1, of which mechanical clamping types including:
manpower mechanical economizer structure including worm assembly or cam assembly or fluid-driving elements or links for driving chucking block to clamp the workpiece;
fluid pressure source from motor or power pump for driving the chucking block to clamp the workpiece;
Magnetic suctions include:
electrical coil for sucking magnetic workpiece or driving the chucking block to clamp the workpiece;
to suck magnetic workpiece with permanet magnet or driving driving the chucking block for clamping the workpiece.

4. The compound locking structure and applied device of mechanical and magnetic suction for fixture according to claim 1, including being applied to chucking type structure for mechanical clamping by claw or magnetic suction by the chuck or other kind of configuration.

5. The compound locking structure and applied device of mechanical and magnetic suction for fixture according to claims 1,2,3 or 4, its driving structure and main body can be one-piece constructed or fixed in combination, or assembly type structure to be removed together with fixed jaw and movable jaw when main body is ready for being applied to plane magnetic sucking plate.

6. The compound locking structure and applied device of mechanical and magnetic suction for fixture according to claim 1, may further include plane magnetic plate with tap holes or T-slot in company with flexible fixture assembly comprising:
a permanent magnet or magnetic coil exciting type magnetic sucking plate, mounted a standard type tap hole assembly for mounting auxiliary chucking claw or T-slot assembly for mounting flexible fixture; the structure also can be a polypheral structure;
flexible fixture assembly adopts conventional jaw type, flexible clamping block, flexible push-down type and so on.

7. The compound locking structure and applied device of mechanical and magnetic suction for fixture according to claims 1,2,3,4,5 or 6 further including vertical or horizontal polypheral assembly through plural assembly of the structure.
